# EUROPEAN PATENT SPECIFICATION

(11) **EP 2 971 962 B1**
(45) Date of publication and mention of the grant of the patent: **07.10.2020**
(21) Application number: 14724203.6
(22) Date of filing: 14.03.2014
(51) Int. Cl.: F23K 5/04, F23K 5/08

(54) **PROCESS FOR HANDLING HEAVY OIL RESIDUE**
SYSTEM UND VERFAHREN ZUR BEHANDLUNG EINER SCHWERÖLREST
SYSTEME ET PROCEDE DE TRAITEMENT D'UN RÉSIDU D'HUILE LOURDE

(30) Priority: 15.03.2013 US 201361799077 P
(43) Date of publication of application: 20.01.2016
(73) Proprietor: Saudi Arabian Oil Company, Dhahran 31311 (SA)
(72) Inventor: NIASS, Tidjani, Dhahran 31311 (SA); YOUNES, Mourad, Victor, Abqaiq 31311 (SA)
(74) Representative: Masala, Gian Tomaso
(86) International application number: PCT/US2014/027172
(87) International publication number: WO 2014/152293

(56) References cited:
- EP-A2- 0 760 451
- CA-A1- 2 019 760
- FR-A2- 2 484 603
- GB-A- 2 441 529
- US-A- 5 170 727
- US-A1- 2002 100 500

## Description

### BACKGROUND OF THE INVENTION

### Field of the Invention

The present invention relates to systems and processes for handling heavy oil residue in conjunction with combustion or other processes utilizing heavy oil residue as a feed.

### Description of Related Art

Heavy oil fractions are produced at various stages in a refinery such as vacuum distillation, visbreaking, solvent deasphalting and fluid catalytic cracking. These fractions are useful as feedstocks for further refining or conversion processes and as fuel for combustion plants. Heavy oil fractions exhibit very high viscosities and levels of impurities, such as sulfur and metals. Thus conventional processes require substantial energy expenditure to make the material fluid to fit the combustion environment so that combustion efficiency is maximized, solids retention in the combustion burners is minimized, and solid particulate flue emissions is minimized. For instance, at ambient conditions, a typical vacuum residue can have a viscosity in the range of 50000 Pa.s (50,000,000 centistokes), similar to some solid materials under comparable ambient conditions. Therefore, residue must be conditioned, generally by heating, to convert it into a condition suitable for pumping and injection to the combustion burners.

Heating heavy oil fractions requires energy, typically in the form of steam and/or electricity. Heating systems generally include heated storage tanks, pumps and heated transport pipes. The necessary temperature increase is accomplished with electric tracing or steam in an effort to maintain all of the heavy oil in a fluid state. Continuous motion of the heavy oil is also employed to avoid dead zones in the piping network. The entire handling system is also typically insulated to avoid cold zones that could result in increased viscosity and plugging.

Therefore, when the additional energy expenditure is subtracted from the combustion plant power output, the overall efficiency is reduced. US 5,170,727 describes a process using supercritical fluids as viscosity reducing agents.

Accordingly, there exists a need for more efficient processes for handling heavy oil residue feedstocks by reducing the amount of external thermal energy required to maintain the material in a fluid and flowable state. There also exists a need for more efficient processes for using heavy oil residue feeds in combustion processes to increase combustion plant efficiency. There exists a further need for combustion processes with reduced CO₂ emissions.

### SUMMARY OF THE INVENTION

In accordance with one or more embodiments, the invention provides a process according to claim 1, using CO₂ to reduce the viscosity of heavy oil residue feeds.

In accordance with one or more further embodiments, a heavy oil residue handling system is described including one or more storage tanks and one or more pumps and a source of gaseous CO₂ which is provided to saturate the heavy oil residue to reduce the viscosity of the residue, thereby reducing the energy required to pump and/or transport the material.

The processes and systems herein described enable the use of CO₂ to handle heavy oil fractions which cannot be atomized at ambient conditions (e.g., in the range of about 20°C to about 25°C, or other conditions of the surrounding air without external application of heating or cooling systems). In certain embodiments, a significant reduction in the requisite energy to maintain such a fuel in fluid form is attained. The energy reduction from herein described residue handling systems facilitate increased combustion plant efficiency and reduced CO₂ emissions. The residue handling system is useful in refineries, power generation plants and other processes utilizing heavy oil residues as a feed.

The integrated systems and processes described herein facilitate the reduction in energy usage to maintain the heavy oil residues in fluid form suitable for injection through the burner and related upstream systems. In such a combustion system, one or more CO₂ capture sub-systems are employed to provide captured CO₂ that is used to reduce the viscosity of the heavy oil residue and facilitate maintenance of the material in a fluid state and having predetermined flow characteristics. The viscosity reduction using CO₂ allows the overall residual oil handling systems to reduce steam and/or electricity consumption. In addition, the temperature and pressure of steam used to atomize fuel in the combustion systems can be reduced resulting in energy savings.

New and existing CO₂ capture and sequestration technologies are available to reduce overall CO₂ emissions and provide incentives such as carbon credits and providing a source of CO₂ as a raw material, coolant or the like. In a capture and sequestration plant, captured CO₂ is compressed and sequestrated underground to avoid its release to the atmosphere.

US5076357 and US2623 596 disclose use of CO₂ to enhance oil recovery when injected in subterranean oil reservoirs by reducing the viscosity of the crude oil while it is still in the ground.

The residue handling systems described herein are suitable for combustion plants in which heavy oil residue is burned to produce power, steam or heat. Further, the residue handling systems include certain embodiments in which all or a portion of the CO₂ used is derived from known and commercially available sources, and certain embodiments in which all or a portion of the CO₂ used is derived from an integrated CO₂ capture and sequestration system, which can be integrated within the combustion plant and/or in one or more additional CO₂-producing processes, e.g., within a refinery, industrial facility, commercial or residential property heating systems or the like.

In additional embodiments, residue handling systems can be present in an automobile, locomotive or marine vessel that uses heavy oil residue as a direct or ancillary fuel source. In such embodiments the residue handling system can obtain all or a portion of the CO₂ used from a known source, such as refillable on-board permanent or portable storage tanks.

Still other aspects, embodiments, and advantages of these exemplary aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed aspects and embodiments. The accompanying drawings are included to provide illustration and a further understanding of the various aspects and embodiments, and are incorporated in, and constitute a part of this specification. The drawings, together with the remainder of the specification, serve to explain principles and operation of the described and claimed aspects and embodiments.

### BRIEF DESCRIPTION OF THE DRAWINGS

The foregoing summary as well as the following detailed description will be best understood when read in conjunction with the attached drawings. For the purpose of illustrating the invention, there are shown in the drawings embodiments which are presently preferred. It should be understood, however, that the invention is not limited to the precise arrangements and apparatus shown. In the drawings, the same numeral is used to refer to the same or similar elements, in which:
FIG. 1 is a process flow diagram of a heavy residue handling system described herein;
FIG. 2 is a process flow diagram of another embodiment of a heavy residue handling system described herein;
FIG. 3 is a process flow diagram of a combustion system including the residue handling system integrating the CO₂ viscosity reduction process described herein;
FIG. 4 is a process flow diagram of another embodiment of a combustion system including the residue handling system integrating a CO₂ viscosity reduction step described herein; and
FIG. 5 is a process flow diagram of a further embodiment of a combustion system including the heavy oil residue handling system integrating the CO₂ viscosity reduction step described herein.

### DETAILED DESCRIPTION OF THE INVENTION

The above objects and further advantages are provided by the processes and systems of the invention described herein which utilize CO₂ addition to reduce viscosity and thereby to facilitate the handling of heavy oil residues as combustion fuel or feedstocks to other processes. The residue handling system described herein can be integrated in combustion chambers using air, oxygen or oxygen-enriched air combustion chambers, other types of combustion processes, or reforming processes using heavy oil residue as a feedstock.

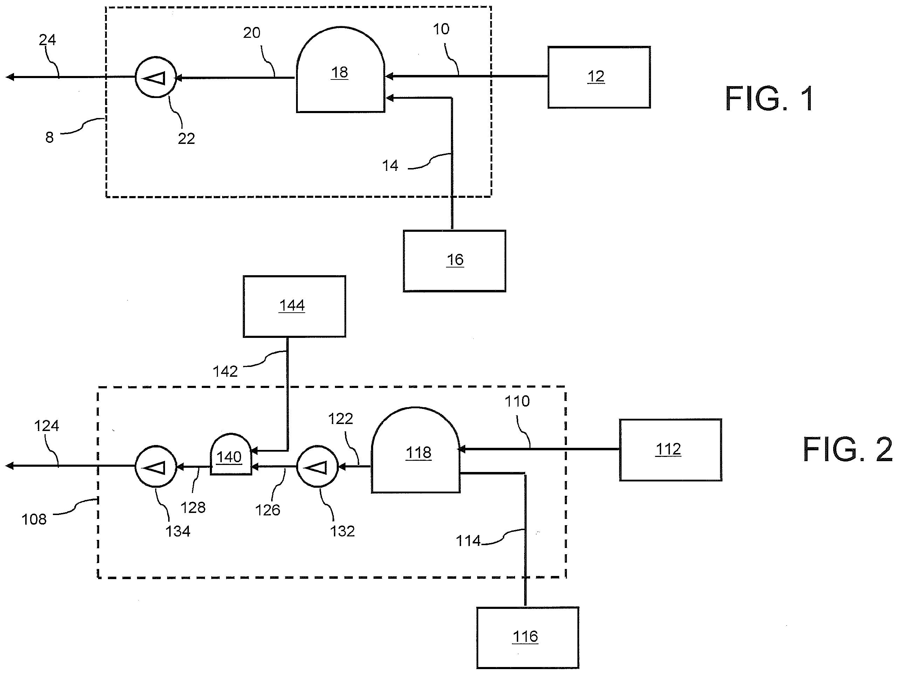

FIG. 1 is a process flow diagram of a heavy residue handling system 8 described herein. In general a stream 10 of CO₂ from a CO₂ source 12 is mixed with a heavy oil residue stream 14 from a source 16 of heavy oil residue in a storage tank 18. The source 12 of CO₂ in certain embodiments can be a suitable external source and/or an integrated CO₂ capture subsystem. A sufficient quantity of CO₂ is provided in stream 10 for mixing with the heavy residue stream 14 at suitable operating conditions of temperature and pressure and a purity level compatible therewith to effectively dissolve the CO₂. The amount of CO₂ which can be dissolved in a given type of heavy oil residue in a process and apparatus described herein can readily be determined by one of ordinary skill in the art in laboratory tests under various conditions of temperature and pressure.

The heavy oil residue feed is supplied to the storage tank 18 via stream 14. The viscosity of the heavy oil and dissolved CO₂ mixture in the storage tank 18 has undergone a significant viscosity reduction. At this stage the viscosity reduction attained by the mixture of CO₂ and heavy oil residue reduces the requisite pump energy requirements to transport the material.

A combined stream of heavy oil and dissolved CO₂, stream 20, is charged to a pump 22 for transport and if necessary compression of CO₂ to provide a stream 24 of heavy oil and dissolved CO₂. Depending on the final viscosity value required for the end use of the heavy oil residue, the mixture can be heated to further reduce the viscosity. In accordance with the process herein, the amount of heating that is required to attain the desired viscosity level is reduced, and the requisite pump energy requirements and heat tracing hardware are also reduced. For instance, in combustion systems it is desirable to reduce the level to the appropriate atomization viscosity, e.g., in certain embodiments in the range of 0.02 Pa.s (20 centistokes, cSt).

In certain embodiments, one more separate or in-line (static or dynamic) mixing units can be provided, for instance, downstream of storage tank 18. In further embodiments the compression in pump 22 provides suitable mixing to reduce the viscosity of the heavy residue. The compressed heavy residue / CO₂ mixture 24 serves as a suitable feed, for instance, to a combustion system as described herein, or for a reforming or conversion process to convert the heavy residue into other hydrocarbon products.

FIG. 2 is a process flow diagram of a further embodiment of a heavy residue handling system 108 described herein. In general, a first stream 110 of CO₂ from a CO₂ source 112 is mixed with a heavy oil residue stream 114 from a source 116 of heavy oil residue in a storage tank 118. The source 112 of CO₂ in certain embodiments can be a suitable external source and/or an integrated CO₂ capture subsystem. A sufficient quantity of CO₂ is provided in stream 110 for mixing with the heavy residue stream 114 at suitable operating conditions and a purity level compatible therewith to effectively dissolve the CO₂.

The heavy oil residue feed is supplied to the storage tank 118 via stream 114. The viscosity of the heavy oil and CO₂ mixture in the storage tank 118 is substantially reduced. At this stage the viscosity reduction attained by the mixture of CO₂ with the heavy oil residue reduces the requisite pump energy requirements to transport the material.

A combined stream of heavy oil and CO₂, stream 122, is charged to a first pump 132 for transport and, if necessary, compression of CO₂. A compressed combined stream 126 from first pump 132 is then charged to one or more mixing or storage units 140 along with additional CO₂ via a stream 142 from a source of CO₂ 144. In certain embodiments, unit 140 is a mixing tank. In further embodiments, unit 140 is an in-line static or dynamic mixer. In further embodiments, unit 140 is a storage tank of comparatively smaller capacity as compared to tank 118 in which CO₂ can be blended with the oil heavy residue blend. An effluent 128 from unit 140 is transported via a second pump 134 to provide a heavy residue / CO₂ mixture 124 which serves as a suitable feed, for instance, to a combustion system as described herein.

In general, it is desirable to provide fluids for pumping that have viscosity values in the range of about 1 to 2 Pa.s (1000 to 2000 cSt). For oil, it is common to provide the fluid at a viscosity of about 0.1 Pa.s (100 cSt) for pumping. As described herein, to attain the desired level of 0.1 Pa.s (100 cSt) without using the viscosity reduction described herein, the temperature should be at or above 124°C, whereas using the process described herein the temperature can be as low as 35°C for 60 bar saturation CO₂ pressure blend.

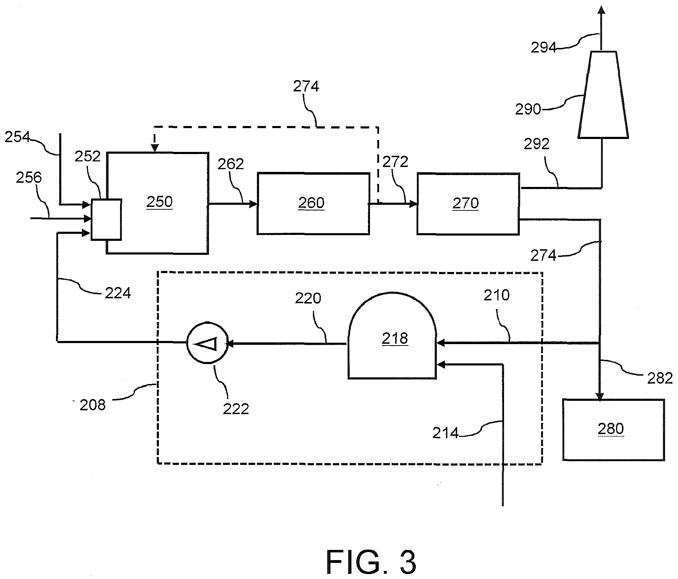

FIG. 3 is a process flow diagram of a combustion system including a heavy residue handling system 208, e.g., as which can be the same or similar to that which is shown and described with respect to FIG. 1. The combustion system integrates CO₂ viscosity reduction and generally includes a combustion chamber 250 equipped with one or more burners 152; one or more flue gas treatment units 260; a CO₂ capture unit 270; heavy oil residue handling system 208 which includes one or more storage tanks 218 and one or more pumps 222; a CO₂ sequestration or utilization unit 280; and a stack 290 to vent remaining flue gases.

Air, oxygen or oxygen-enriched air are supplied via stream 254 to one or more burners 252 along with a heavy oil residue/CO₂ mixture via stream 224 and a steam stream 256 used for fuel atomization to ensure a proper combustion of the fuel in the combustion chamber 250. In certain alternative embodiment, atomizing media other than, or in conjunction with, steam can be used, such as CO₂ or another suitable atomizing gas.

The flue gases exit the combustion chamber 250 via stream 262 to enter one or more flue gas treatment units 260. While not shown, it is understood by those skilled in the art the flue gas treatment unit 260 can include one or more of each of particulate removal units, sulfur oxides removal units, heavy metal removal units, and nitrogen oxides removal units.

The effluent flue gases from flue gas treatment unit(s) 260, stream 272, are charged to the CO₂ capture unit 270 in which a requisite amount of CO₂ is removed from the main flue gas stream. Part of the flue gases derived from stream 272 can optionally be recycled to the combustion chamber to enhance combustion (as indicated by stream 274 shown in dashed lines), particularly in embodiments in which the combustion chamber relies on oxygen or oxygen-enriched air.

A CO₂-lean flue gas stream exits the CO₂ capture unit 270, stream 292, and is passed to the stack 290 and then discharged to atmosphere via a stream 294 as is known.

The captured CO₂ exits the CO₂ capture unit 270 via stream 274 and is divided into a stream 282 charged to the CO₂ sequestration or utilization unit (CO₂-S/U) and a stream 210 charged to the heavy oil residue storage tank 218.

Heavy oil residue feed is supplied to the storage tank 218 via a stream 214. The CO₂ is mixed with the heavy oil residue to reduce its viscosity, thereby reducing the requisite pump energy requirements, heat tracing hardware and requisite heating energy to allow the blend reaching the appropriate atomization viscosity, e.g., in certain embodiments in the range of 0.02 Pa.s (20 cSt).

The heavy oil residue/CO₂ mixture leaves the storage tank 218 via the pump 222 suction line 220. The stream 224 is fed under pressure to the combustion chamber burner(s) 252.

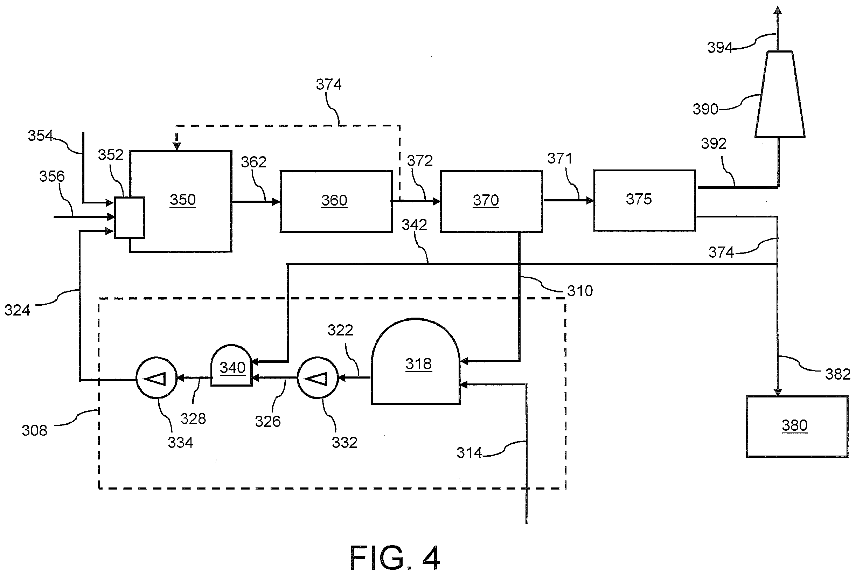

FIG. 4 is a process flow diagram of another embodiment of a combustion system including a residue handling system 308, e.g., as which can be the same or similar to that which is shown and described with respect to FIG. 2. The combustion system integrates CO₂ viscosity reduction and generally includes a combustion chamber 350 equipped with one or more burners 352; one or more flue gas treatment units 360; plural CO₂ capture units 370 and 375; heavy oil residue handling system 308 which includes one or more storage tanks 318, one or more mixing or storage units 340 and plural pumps (332 and 334); a CO₂ sequestration or utilization unit 380; and a stack 290 to vent remaining flue gases.

As described above with reference to FIG. 3, air, oxygen or oxygen-enriched air are supplied via stream 354 to one or more burners 352 along with a heavy oil residue/CO₂ mixture via stream 324 and a steam stream 356 used for fuel atomization to ensure a proper combustion of the fuel in the combustion chamber 350, and flue gases exit the combustion chamber 350 via a stream 362 to enter one or more flue gas treatment units 360. In certain alternative embodiment, atomizing media other than, or in conjunction with, steam can be used, such as CO₂ or another suitable atomizing gas.

The effluent flue gases from the flue gas treatment unit(s) 360, stream 372, are charged to a first CO₂ capture unit 370. A requisite amount of CO₂, stream 310, is removed from the main flue gas stream for introduction into storage tank 318 to maintain equilibrium therein. The quantity removed from the first CO₂ capture unit 370 1 is determined by the requisite amount of viscosity reduction and process economic considerations, e.g., the cost or removing quantities of CO₂ beyond a predetermined level. The CO₂ is compressed (not shown) to the desired pressure and conveyed to the storage tank 318 via stream 310.

The CO₂ is mixed with the heavy oil residue from stream 314 to reduce its viscosity, thereby reducing the requisite pump energy requirements, heat tracing hardware and requisite heating energy to assure that the blend reaches the desired atomization viscosity, e.g., in certain embodiments in the range of 20 cSt.

Part of the flue gases derived from stream 372 can optionally be recycled to the combustion chamber 350 to enhance combustion (as indicated by stream 374 shown in dashed lines), particularly in embodiments in which the combustion chamber relies on oxygen or oxygen-enriched air. The remaining CO₂-lean flue gas stream exits the first CO₂ capture unit 370, stream 371, and is passed to the second CO₂ capture unit 375 in which where the CO₂ is recovered and compressed to the required pressure. A CO₂ lean flue gas stream 392 exits the second CO₂ capture unit 375 and is passed to the stack 390 and then discharged to atmosphere via a stream 394 as is known.

The captured CO₂ exits the second CO₂ capture unit 375 via a stream 374 and is divided into a stream 382 charged to the CO₂ sequestration or utilization unit 380 and a stream 342 charged to a unit 340. In certain embodiments, unit 340 is a static or dynamic mixer. In further embodiments, unit 340 is a storage tank of comparatively smaller capacity as compared to tank 318 in which CO₂ is be blended with the oil heavy residue blend.

The heavy oil residue feed is supplied to the storage tank 318 via stream 314. The CO₂ is mixed with the heavy oil residue to reduce its viscosity, thereby reducing the requisite pump energy requirements, heat tracing hardware and requisite heating energy to assure that the blend reaches the desired viscosity

The heavy oil residue/CO₂ mixture leaves the storage tank 318 via pump 332 suction line 322 and is compressed and transferred to unit 340 via stream 326. The heavy oil residue/CO₂ mixture stream 326 is mixed with additional CO₂ via stream 342 to provide additional viscosity reduction and further reducing the heating hardware and energy requirements to allow the blend reaching the appropriate atomization viscosity, e.g., in the range of 0.02 Pa.s (20 cSt).

The heavy oil residue/CO₂ mixture leaves unit 340 via pump 334 suction line 328 and is compressed and transferred to the combustion chamber burner(s) 352 via stream 324..

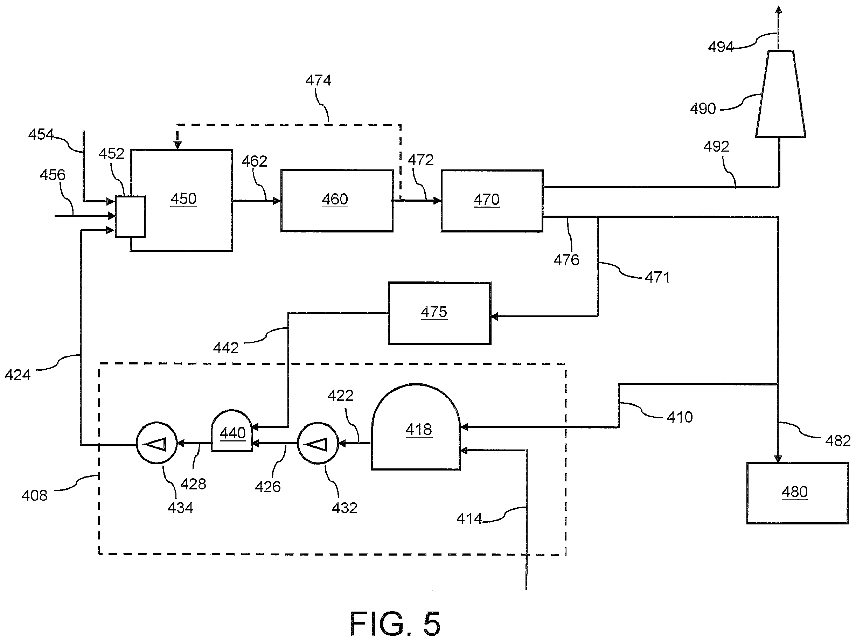

FIG. 5 is a process flow diagram of a further embodiment of a combustion system including a residue handling system 408, e.g., as which can be the same or similar to that which is shown and described with respect to FIG. 2. The combustion system integrates CO₂ viscosity reduction and generally includes a combustion chamber 450 equipped with one or more burners 452; one or more flue gas treatment units 460; plural CO₂ capture units (470 and 475); heavy oil residue handling system 408 which includes one or more storage tanks 418, one or more mixing or storage units 440 and plural pumps (432 and 434); a CO₂ sequestration or utilization unit 480; and a stack 490 to vent remaining flue gases.

As described with respect to FIG. 3, air, oxygen or oxygen-enriched air are supplied via stream 454 to one or more burners 452 along with a heavy oil residue/CO₂ mixture via stream 424 and a steam stream 456 used for fuel atomization to ensure a proper combustion of the fuel in the combustion chamber 450, and flue gases exit the combustion chamber 450 via a stream 462 to enter one or more flue gas treatment units 460. In certain alternative embodiment, atomizing media other than, or in conjunction with, steam can be used, such as CO₂ or another suitable atomizing gas.

The effluent flue gases from the flue gas treatment unit(s) 460, stream 472, are charged to a first CO₂ capture unit 470. A CO₂ lean flue gas stream exits the first CO₂ capture unit 470 via a stream 492 to the stack 490 and then to atmosphere via stream 494. Part of the flue gases derived from stream 472 can optionally be recycled to the combustion chamber to enhance combustion (as indicated by stream 474 shown in dashed lines), particularly in embodiments in which the combustion chamber relies on oxygen or oxygen-enriched air.

Captured CO₂ exits the first CO₂ capture unit 470 via a stream 476 to feed CO₂ sequestration or utilization unit 480 via stream 482, heavy oil residue storage tank 418 via stream 410, and the second CO₂ processing unit 475 via stream 471.

The heavy oil residue is supplied to the storage tank 418 via stream 414. The CO₂ feed from the first CO₂ capture unit 470 via stream 310 is mixed with the heavy oil residue. The CO₂ is mixed with the heavy oil residue to reduce its viscosity, thereby reducing the requisite pump energy requirements, heat tracing hardware and requisite heating energy to assure that the fuel reaches the desired viscosity.

The heavy oil residue/CO₂ mixture leaves storage tank 418 via pump 432 suction line 422 and is compressed and transferred to unit 440 via stream 426. In certain embodiments, unit 440 is a static or dynamic mixer. In further embodiments, unit 440 is a storage tank of comparatively smaller capacity as compared to tank 418 in which CO₂ is be blended with the oil heavy residue blend. The heavy oil residue/CO₂ mixture stream 426 is mixed with additional CO₂ to achieve additional viscosity reduction and further reducing the heating hardware and energy requirements to assure that the blend reaches the appropriate atomization viscosity, e.g., in the range of 0.02 Pa.s (20 cSt).

The CO₂ stream 471 enters the second CO₂ capture unit 475 to be compressed to the required pressure for unit 140 and then exits the second CO₂ capture unit 475 to feed unit 475 via stream 442. The heavy oil residue/CO₂ mixture leaves unit 440 via pump 434 suction line 428 and is compressed and transferred to the combustion chamber burner(s) 452 via stream 424.

In certain embodiments, the heavy oil residue/CO₂ mixture viscosity can attain the viscosity atomization level without requiring external heating. In such cases, mechanical atomization fuel injectors can be used instead of, or in conjunction with, steam atomization injectors to conserve steam (e.g., from streams 256, 356 and 456 described herein). In certain embodiments steam and/or another suitable atomizing gas can be used in conjunction with mechanical atomization injectors with a primary purpose of controlling the temperature of the burner to avoid or minimize the likelihood of coking, rather than atomization as in embodiments in which mechanical atomization fuel injectors are not used.

For the purpose of this simplified schematic illustration and description, the numerous valves, temperature sensors, electronic controllers and the like that are customarily employed and well known to those of ordinary skill in the art of the unit operations described herein are not included. Further, accompanying components that are in the unit operations including combustion processes such as, for example, air or oxygen supplies and flue gas handling are not shown.

Advantageously, the use of CO₂ as described herein solves the problem of reducing the amount of energy required for heavy oil residue handling in combustion plants burning such residues. Indeed, in conventional combustion plants using heavy oil residues as fuel, fuel handling requires use of additional energy in the form of electricity or steam. The present system and method permits significant energy reduction by using CO₂ to decrease the fuel viscosity and ensure its proper handling. In further embodiments herein, CO₂ used for heavy oil residue handling is derived from integrated CO₂ capture systems. In conventional CO₂ capture and sequestration processes using heavy oil residues as a fuel, the CO₂ is injected underground for disposal, while additional energy is used for fuel handling. Use of the present system and method in combustion plants integrating CO₂ capture permits a portion of the captured CO₂ to be used to facilitate effective feedstock handling and minimizing the requisite additional energy for such handling.

The initial feedstock for use in above-described apparatus and process can be a crude or partially refined oil product obtained from various sources. The source of feedstock can be crude oil, synthetic crude oil, bitumen, oil sand, shale oil, coal liquids, or a combination including one of the foregoing sources. For example, the feedstock can be a straight run gas oil or other refinery intermediate stream such as vacuum gas oil, deasphalted oil and/or demetalized oil obtained from a solvent deasphalting process, light coker or heavy coker gas oil obtained from a coker process, cycle oil obtained from an FCC process separate from the integrated FCC process described herein, gas oil obtained from a visbreaking process, or any combination of the foregoing products. In certain embodiments, vacuum gas oil is a suitable feedstock for the integrated process. A suitable feedstock contains hydrocarbons having boiling point of about 36°C to about 650°C and in certain embodiments in the range of about 350°C to about 565°C.

### Example 1

A typical oil heavy residue is considered in this prophetic example to show the potential gain obtained when applying the process described herein in a power plant fired by heavy oil residue that has an output in the range of 600 megawatts electrical output (MWe). As a comparative example, initial heavy oil residue has a density of 1020 kg/m³ at 25°C and a viscosity of 13.28 Pa.s (13280 cSt) at 50°C. Table 1 shows the heavy residue oil temperature at different viscosities of conventional systems, and the required temperatures to attain the same viscosities when the oil is saturated at a pressure of 20 bar CO₂ in a first example and a pressure of 60 bar CO₂ in a second example according to the system and process herein.

**Table 1- Oil heavy residue temperature in °C at different viscosities :0.20 Pa.s (20 cSt); 0.1 Pa.s (100 cSt); 1 Pa.s (1000 cSt).**

| | | | |
|---|---|---|---|
| Viscosity (cSt) | 20 | 100 | 1000 |
| Temperature of original oil (°C) | 180 | 124 | 80 |
| Temperature of the heavy oil residue at 20 bar CO₂ saturation (°C) | 140 | 93 | 54 |
| Temperature of the heavy oil residue at 60 bar CO₂ saturation (°C) | 75 | 35 | <*Tamb** |

| | | | |
|---|---|---|---|
| **Tamb: Ambient temperature* | | | |

As shown in Table 1, the addition of CO₂ to the heavy oil residue decreases its viscosity at specific temperatures. Accordingly it is possible to reach the same blend viscosity at lower temperatures when adding CO₂. In particular, Table 1 shows that a suitable storage temperature for heavy oil residue is above 124°C in the base case scenario while it can be reduced to 93°C in the case of 20 bar saturation CO₂ pressure blend and to 35°C for 60 bar saturation CO₂ pressure blend.

Therefore, the heat tracing requirement to maintain the temperature of the heavy oil residue, and consequently its viscosity is reduced to as low as no heat tracing requirement at 60 bar CO₂ saturation.

A viscosity of 0.02 Pa.s (20cSt) is commonly required at the burner to facilitate suitable fuel atomization and thus complete and efficient combustion. To attain this viscosity reduction according to conventional processes, a temperature of 180°C is required, whereas it is reduced to 140°C at 20 bar CO₂ saturation and further reduced to 75°C at 60 bar CO₂ saturation.

The steam characteristics required are accordingly modified. For instance, without the herein described viscosity reduction, it is necessary to use steam at 10 bars and 230°C. In contrast, steam at 6 bars and 160°C can be used where the CO₂ saturation is 20 bars, and steam at 2 bars and 120°C can be used where the CO₂ saturation is at 60 bars. This consequently results in reduced energy usage for steam heating and higher operation of the steam in the steam cycle, thus a higher net output for the power plant. In a typical example in the range of 600 MWe power plant, the oil heavy residue mass flow rate is around 37.5 kg/s and the required steam for fuel atomization is 30% of the fuel mass flow rate, thus around 11.25 kg/s. The difference in the steam quality/conditions will allow net savings of 1328 kilowatts of electricity (kWe) where the CO₂ saturation is 20 bars and 3300 kWe where the CO₂ saturation is 60 bars. If the compression energy of CO₂ and the oil heavy residue to 20 and 60 bar is considered, the net power savings would be 1183 kWe and 2798 kWe for the CO₂ saturation levels of 20 bars and 60 bars, respectively.

Note that with the above considerations, the steam pressure considered for atomization is lower than the heavy oil residue/CO₂ mixture stream. In this case, either higher steam pressure is considered or an intermediate expansion step is preferably added within the injector to allow the atomization of the heavy fuel oil at the considered temperatures and pressures. Moreover, all of the atomizing steam energy can be conserved if mechanical atomization injectors are used since the heavy fuel oil/CO₂ mixture is provided at high pressures.

### Example 2

In addition to the savings on the steam quantity used for the atomization of the fuel, considerable savings can be realized by the reduction in the requisite heating of the fuel from the storage temperature, e.g., 0.1 Pa.s (100 cSt) viscosity, to the burner, Pa.s (20 cSt) viscosity, since the heating is performed by steam extracted from the steam cycle.

In this example, the storage temperature is deemed to be the same for the three cases, i.e., 120°C, which is the storing temperature required for the comparative example. In the base case, the heavy oil residue should be heated to 180°C, whereas at 20 bars CO₂ it saturation is should be heated to 140°C, and no additional heating is required for CO₂ saturation at 60 bars.

The incremental savings on steam requirements for fuel heating would be 1335 kWe for the 20 bar saturation CO₂ case and 1856 kWe for the 60 bar saturation CO₂ case leading to total net savings of 2518 kWe in the 20 bar saturation CO₂ case and 4654 kWe in the 60 bar saturation CO₂ case.

These savings represent respectively 0.4 % and 0.77% of the net power output, equivalent to increasing the net efficiency of the power plant by 0.17 and 0.32 points, respectively.

The method and system of the present invention have been described above and in the attached drawings; however, modifications will be apparent to those of ordinary skill in the art and the scope of protection for the invention is to be defined by the claims that follow.

## Claims

1. A method of improving efficiency of a combustion system utilizing a high viscosity heavy oil residue fuel which cannot be atomized at ambient conditions, the method comprising:
a. providing a source of CO₂ or a CO₂-rich gaseous mixture, wherein said CO₂ or a CO₂-rich gaseous mixture is in gaseous phase at ambient conditions;
b. bringing the CO₂ or CO₂-rich mixture into intimate contact with the heavy oil residue under predetermined conditions of temperature and pressure;
c. maintaining the contact of the CO₂ or CO₂-rich mixture with the heavy oil residue until a predetermined concentration of dissolved CO₂ is attained and the viscosity of the heavy oil residue is reduced; and
d. pumping and atomizing the reduced-viscosity heavy oil residue for combustion in a combustion chamber.

2. The method of claim 1, further comprising introducing the reduced-viscosity heavy oil residue with dissolved CO₂ into a pressurized heated storage vessel under predetermined conditions of temperature and pressure to maintain the viscosity of the heavy oil residue within a prescribed viscosity range, and passing the reduced-viscosity heavy oil residue from the storage vessel and atomizing it for combustion in a combustion chamber.

3. The method of claim 1 wherein the CO₂ or CO₂-rich mixture and heavy oil residue are contacted in an agitated mixing vessel under an atmosphere of pressurized gaseous CO₂.

4. The method of claim 1 wherein the CO₂ or CO₂-rich mixture is introduced into a moving stream of the heavy oil residue and passed through a static or dynamic in-line mixing device to dissolve the CO₂ in the heavy oil residue.

5. The method of claim 1 wherein the atomization of the reduced-viscosity heavy oil residue in step (d) is accomplished by an atomizing media including steam or CO₂.

6. The method of claim 1 wherein the atomization of the reduced-viscosity heavy oil residue in step (d) is accomplished by one or more mechanical atomization injectors.

7. The method of claim 1 wherein the source of CO₂ or a CO₂-rich gaseous mixture is provided from an integrated CO₂ capture and processing unit.

8. The method of claim 1 wherein the source of CO₂ or a CO₂-rich gaseous mixture is provided from at least a two-stage CO₂ capture and processing unit, each stage delivering CO₂ or a CO₂-rich gaseous mixture at different pressures.

## Patentansprüche

1. Verfahren zur Effizienzsteigerung einer Verbrennungsanlage, die einen Brennstoff aus hochviskosem Schwerölrest verwendet, der unter Umgebungsbedingungen nicht zerstäubt werden kann, wobei das Verfahren aufweist:
a. Bereitstellung einer CO₂-Quelle oder eines CO₂ - reichen Gasgemischs, wobei das CO₂ oder das CO₂ - reiche Gasgemisch bei Umgebungsbedingungen im gasförmigen Zustand ist;
b. Verbringen des CO₂ oder des CO₂ - reichen Gemisches in engen Kontakt mit dem Schwerölrest unter vorgegebenen Temperatur- und Druckbedingungen;
c. Aufrechterhalten des Kontaktes des CO₂ oder des CO₂ - reichen Gemischs mit dem Schwerölrest bis eine vorgegebene Konzentration von gelöstem CO₂ erreicht und die Viskosität des Schwerölrests reduziert ist; und
d. Fördern und Zerstäuben des Schwerölrests mit reduzierter Viskosität zur Verbrennung in einer Verbrennungskammer.

2. Verfahren gemäß Anspruch 1, weiter aufweisend den Vorgang des Einbringens des Schwerölrest mit gelöstem CO₂ in einen druckbeaufschlagten, geheizten Vorratsbehälter unter vorgegebenen Temperatur- und Druckbedingungen, um die Viskosität des Schwerölrests innerhalb eines vorgegebenen Bereichs zu halten, und des Förderns des Schwerölrestes mit reduzierter Viskosität aus dem Vorratsbehälter und des Zerstäubens desselbigen zur Verbrennung in einer Verbrennungskammer.

3. Verfahren gemäß Anspruch 1, wobei das CO₂ oder das CO₂ - reiche Gemisch und der Schwerölrest in einem bewegten Mischbehälter in einer Atmosphäre von druckbeaufschlagtem, gasförmigem CO₂ in Kontakt gebracht werden.

4. Verfahren gemäß Anspruch 1, wobei das CO₂ oder das CO₂ - reiche Gemisch in einen bewegten Strom des Schwerölrests eingebracht wird und eine statische oder dynamische Reihenmischvorrichtung durchströmt, um das CO₂ in dem Schwerölrest zu lösen.

5. Verfahren gemäß Anspruch 1, wobei die Zerstäubung des Schwerölrests mit reduzierter Viskosität aus Schritt (d) mit einem Zerstäubungsmittel, Dampf oder CO₂ eingeschlossen, erreicht wird.

6. Verfahren gemäß Anspruch 1, wobei die Zerstäubung des Schwerölrests mit reduzierter Viskosität aus Schritt (d) mit einem oder mehreren mechanischen Zerstäubungsinjektoren erreicht wird.

7. Verfahren gemäß Anspruch 1, wobei die CO₂-Quelle oder ein CO₂ - reiches Gasgemischs von einer integrierten CO₂- Auffang- und Verarbeitungseinheit bereitgestellt wird.

8. Verfahren gemäß Anspruch 1, wobei die CO₂-Quelle oder ein CO₂ - reiches Gasgemischs von einer zumindest zweistufigen CO₂- Auffang- und Verarbeitungseinheit bereitgestellt wird, wobei jede Stufe CO₂ oder CO₂ - reiches Gasgemisch mit unterschiedlichem Druck liefert.

## Revendications

1. Procédé d'amélioration du rendement d'un système de combustion utilisant un combustible de résidu de pétrole lourd à haute viscosité qui ne peut pas être atomisé aux conditions ambiantes, le procédé comprenant les étapes consistant à :
a. fournir une source de CO₂ ou d'un mélange gazeux riche en CO₂, dans lequel ledit CO₂ ou mélange gazeux riche en CO₂ est en phase gazeuse aux conditions ambiantes ;
b. amener le CO₂ ou le mélange riche en CO₂ en contact intime avec le résidu de pétrole lourd sous des conditions prédéterminées de température et de pression ;
c. maintenir le contact du CO₂ ou du mélange riche en CO₂ avec le résidu de pétrole lourd jusqu'à ce qu'une concentration prédéterminée de CO₂ dissous soit atteinte et que la viscosité du résidu de pétrole lourd soit réduite ; et
d. pomper et atomiser le résidu de pétrole lourd à viscosité réduite pour une combustion dans une chambre de combustion.

2. Procédé selon la revendication 1, comprenant en outre les étapes consistant à introduire le résidu de pétrole lourd à viscosité réduite avec du CO₂ dissous dans une cuve de stockage chauffée sous pression sous des conditions prédéterminées de température et de pression pour maintenir la viscosité du résidu de pétrole lourd à l'intérieur d'une plage de viscosité prescrite, et faire passer le résidu de pétrole lourd à viscosité réduite à partir de la cuve de stockage et l'atomiser pour une combustion dans une chambre de combustion.

3. Procédé selon la revendication 1 dans lequel le CO₂ ou le mélange riche en CO₂ et le résidu de pétrole lourd sont mis en contact dans une cuve de mélange agitée sous une atmosphère de CO₂ gazeux sous pression.

4. Procédé selon la revendication 1 dans lequel le CO₂ ou le mélange riche en CO₂ est introduit dans un courant mobile du résidu de pétrole lourd et fait passer à travers un dispositif de mélange en ligne statique ou dynamique pour dissoudre le CO₂ dans le résidu de pétrole lourd.

5. Procédé selon la revendication 1 dans lequel l'atomisation du résidu de pétrole lourd à viscosité réduite à l'étape (d) est accomplie par un milieu d'atomisation incluant de la vapeur ou du CO₂.

6. Procédé selon la revendication 1 dans lequel l'atomisation du résidu de pétrole lourd à viscosité réduite à l'étape (d) est accomplie par un ou plusieurs injecteurs d'atomisation mécanique.

7. Procédé selon la revendication 1 dans lequel la source de CO₂ ou d'un mélange gazeux riche en CO₂ est fournie à partir d'une unité de capture et de traitement de CO₂ intégrée.

8. Procédé selon la revendication 1 dans lequel la source de CO₂ ou d'un mélange gazeux riche en CO₂ est fournie à partir d'au moins une unité de capture et de traitement de CO₂ à deux étages, chaque étage distribuant du CO₂ ou un mélange gazeux riche en CO₂ à différentes pressions.
